(19) Europäisches Patentamt
European Patent Office
Office européen des brevets

(11) **EP 3 243 715 B1**

(12) **EUROPEAN PATENT SPECIFICATION**

(45) Date of publication and mention
of the grant of the patent:
**13.10.2021 Bulletin 2021/41**

(51) Int Cl.:
**B60T 13/16** *(2006.01)*      **B60T 15/22** *(2006.01)*

(21) Application number: **17170727.6**

(22) Date of filing: **11.05.2017**

(54) **HYDRAULIC DISTRIBUTOR FOR BRAKING A TOWED MACHINE**

HYDRAULISCHER VERTEILER ZUM BREMSEN EINES GERÄTEANHÄNGERS

DISTRIBUTEUR HYDRAULIQUE POUR FREINER UNE MACHINE REMORQUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.05.2016 IT UA20163358**

(43) Date of publication of application:
**15.11.2017 Bulletin 2017/46**

(73) Proprietor: **Slanzi Oleodinamica S.r.l.**
**42017 Novellara (IT)**

(72) Inventor: **GIOVANETTI, Gian Pietro**
**42017 NOVELLARA (IT)**

(74) Representative: **Cataldi, Giulia et al**
**Studio Torta S.p.A.**
**Via Viotti, 9**
**10121 Torino (IT)**

(56) References cited:
**EP-A1- 0 400 432      WO-A1-2014/096159
FR-A1- 2 496 577**

**Description**

The present invention relates to a hydraulic distributor and to a hydraulic system for braking an agricultural or forestry machine.

In particular, the present invention finds beneficial application in a hydraulic distributor and braking system which must comply with the new EU regulation 167/2013 which concerns the requirements relating to the braking devices of vehicles for the purposes of type-approval of agricultural and forestry vehicles (hereinafter new regulation) relating to the braking devices of towed vehicles.

The new regulation requires, among other things, that an agricultural or forestry machine must have a main high-pressure oil line and an auxiliary low-pressure oil line separated from each other so that one line can ensure braking of the towed vehicle even if there is a failure of the other line.

The new regulation also imposes very precise requirements relating to the timing and mode of braking of the towed vehicle if there is a failure.

The new regulation also provides for a transitional period, until 2020, during which it is still possible to use towed vehicles that follow the old pre-2016 regulation, i.e. controlled by a single hydraulic line.

PRIOR ART

There are known hydraulic distributors for braking circuits for an agricultural or forestry machine for the delivery of hydraulic fluid to towed vehicles, for example in EP0400432, however these types of distributors are controlled with a single hydraulic line. A hydraulic distributor controlled with two hydraulic lines is known from WO 2014/096159 A1.

DESCRIPTION OF THE INVENTION

A purpose of the present invention is to provide a hydraulic distributor and a hydraulic system for braking an agricultural or forestry machine, which complies with the requirements of the new regulation.

In particular, a purpose of the present invention is to provide a hydraulic distributor and a hydraulic system which comprise a main line and a separate auxiliary line (as laid down in the new regulation) and an automatic system for operating an emergency braking system if a malfunction is detected in a line.

A purpose of the present invention is to provide a hydraulic distributor and a hydraulic system which can also be used for towed vehicles constructed in accordance with the old pre-2016 regulation, which only requires one hydraulic line for towed vehicles. In other words, a purpose of the present invention is to provide a hydraulic distributor and a hydraulic system which can be used on board towed vehicles constructed according to either the new or the old regulation.

According to the present invention a hydraulic distributor and a hydraulic braking system is provided according to what is established in the appended claims.

BRIEF DESCRIPTION OF THE DRAWINGS

The invention will now be described with reference to the accompanying drawings which illustrate non-limiting examples of embodiments, wherein:

-    figure 1 is a main view of a hydraulic distributor according to the present invention;
-    figure 2 is a top rear view of the hydraulic distributor of figure 1;
-    figure 3 is a top view, in scale, of the hydraulic distributor of figure 1;
-    figure 4 is a section along the line IV-IV of figure 1.
-    figure 5 is a section along the line V-V of figure 2.
-    figure 6 is a section along the line VI-VI of figure 3.
-    figure 7 is a diagram, with some parts removed for clarity, of the distributor of figure 1 in a first operating configuration;
-    figure 8 is a diagram, with some parts removed for clarity, of the distributor of figure 1 in a second operating configuration;
-    figure 9 is a diagram, with some parts removed for clarity, of the distributor of figure 1 in a third operating configuration;
-    figure 10 is a diagram, with some parts removed for clarity, of the distributor of figure 1 in a fourth operating configuration;
-    figure 11 is a hydraulic diagram of a hydraulic system comprising a distributor according to figure 1;
-    figure 12 is a hydraulic diagram of a hydraulic system comprising a variant of the distributor of figure 1;
-    figure 13 is a hydraulic diagram of a hydraulic system comprising a variant of the distributor of figure 1;
-    figure 14 is a hydraulic diagram of a hydraulic system comprising a variant of the distributor of figure 1;
-    figure 15 is a graph relating to the braking characteristics required in accordance with the old pre-2016 regulation;
-    figure 16 is a graph relating to the braking characteristics required in accordance with the new regulation;

In the figures, the numeral 1 indicates as a whole a hydraulic distributor for braking an agricultural or forestry machine (of known type and not shown), in particular for the braking of a towed vehicle (of known type and not shown) coupled to the agricultural or forestry machine.

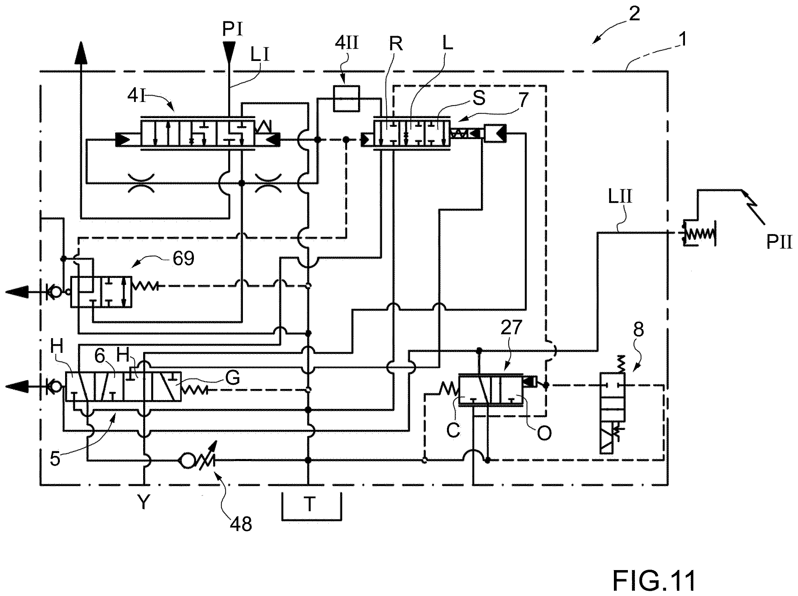

The distributor 1 is a component of a hydraulic braking system 2 (shown schematically in figures 11 to 14) for the agricultural or forestry machine.

In particular, the system 2 comprises, in known manner, a main supply PI for high-pressure oil, an auxiliary supply PII for low-pressure oil, and an exhaust T.

The main supply PI is configured to supply oil at a pressure of up to approximately 150 bar to a main line LI. The auxiliary supply PII is configured to supply oil at a pressure of up to approximately 30 bar to an auxiliary line LII.

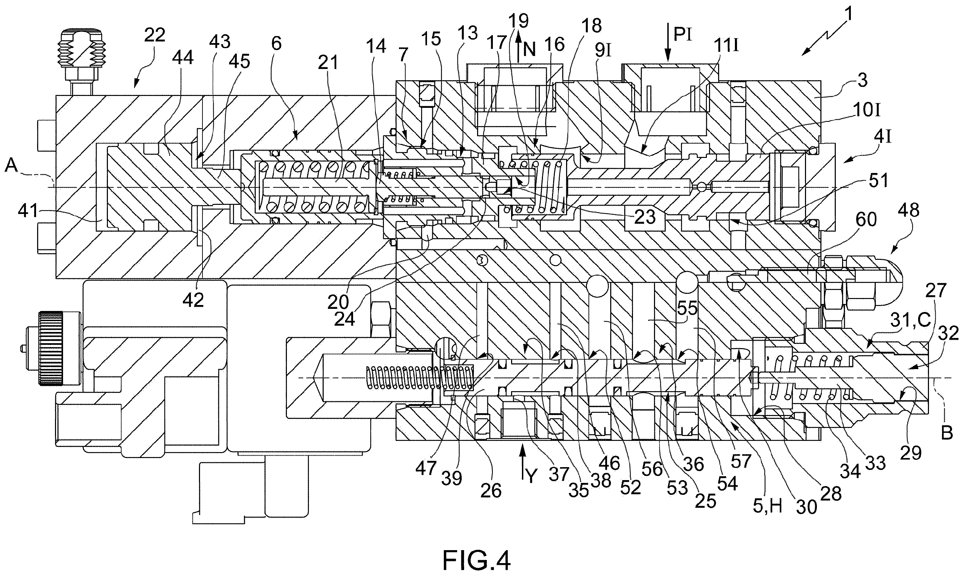

As shown in figures 4 to 6, the distributor 1 comprises a body 3 inside which chambers are formed and conduits for the flow of oil and the valve housing, as will be shown.

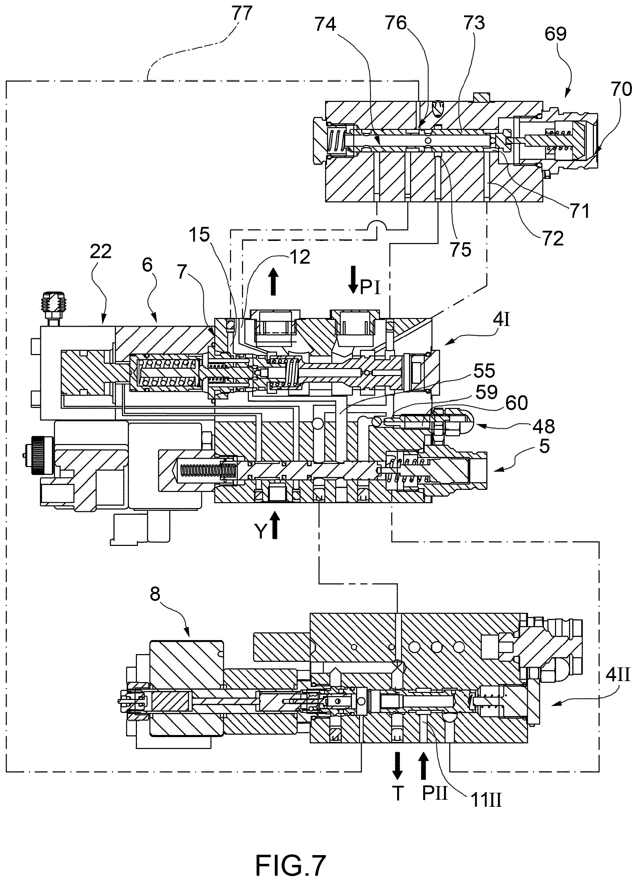

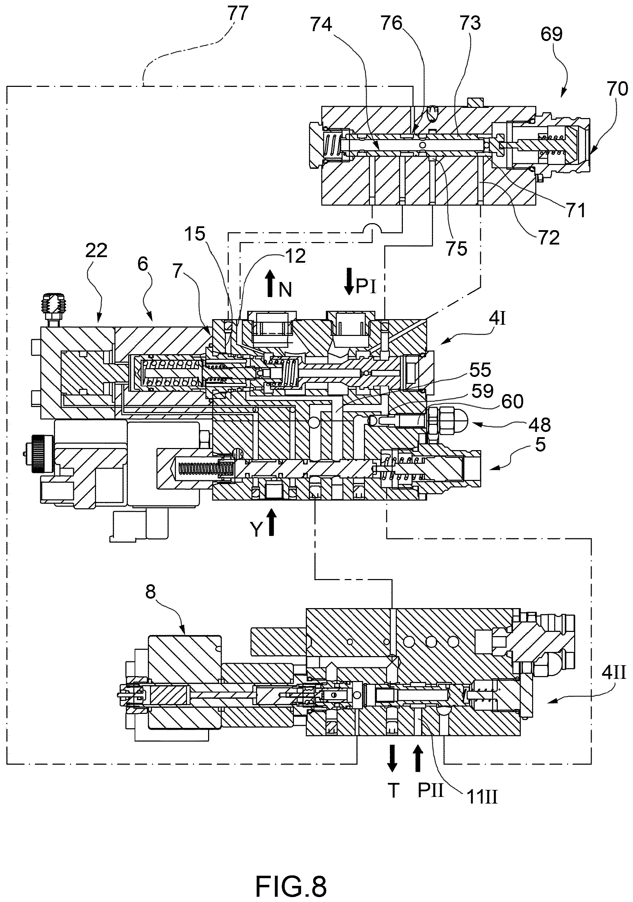

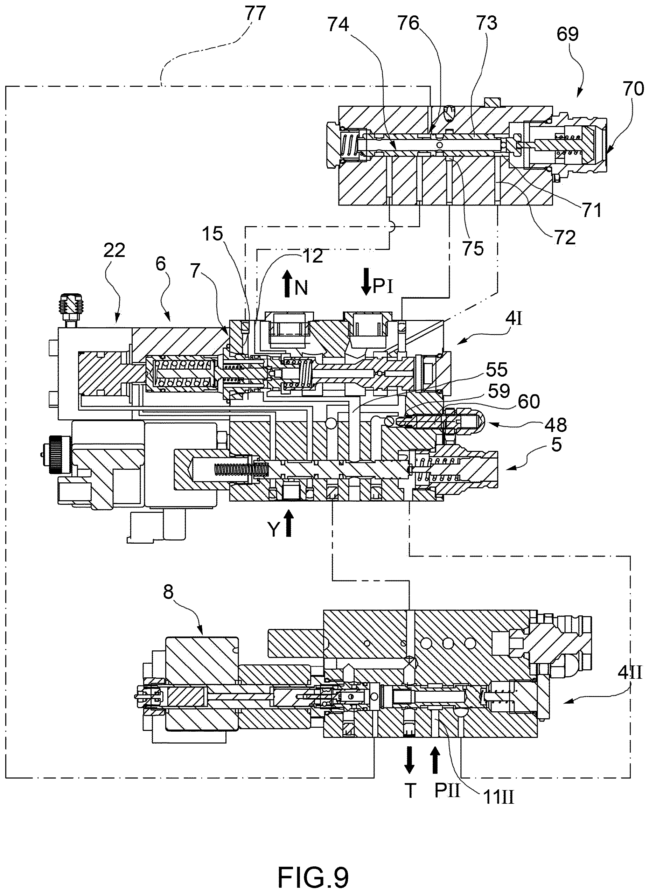

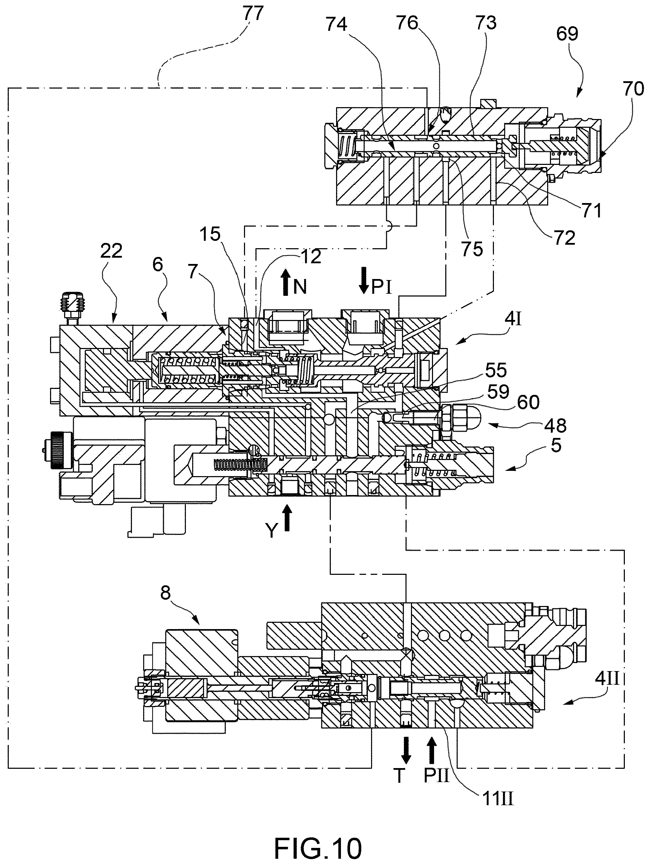

As shown schematically in figures 7 to 10, the distributor 1 comprises:

- a main brake valve 4I arranged in the main line LI for sending, in use, high-pressure oil to the towed vehicle;
- an auxiliary brake valve 4II arranged in the main line LII for sending, in use, low-pressure oil to the towed vehicle according to the new regulation; and
- a sensor valve 5 arranged in the auxiliary line LII according to the new regulation to identify towed vehicles and switch operation of the distributor 1.

The distributor 1 further comprises a main actuator 6 and a pilot valve 7. The main actuator 6 is configured to operate the main brake valve 4I via the pilot valve 7.

The distributor 1 also comprises an auxiliary actuator 8 which is configured to operate the auxiliary brake valve 4II if a fault occurs during braking.

Advantageously, the distributor 1 comprises a signal conduit 55 (shown schematically in figures 7 to 10) which, as better shown hereinafter, connects the pilot valve 7 with the sensor valve 5 and is configured to calibrate the operation of the main brake valve 4I if the distributor 1 is connected to a towed vehicle according to the new or old regulation.

As shown in figure 4, the distributor 1 has a main supply chamber 9I having a longitudinal axis A. The distributor 1 also comprises a main supply spool 10I.

It should be noted that the term spool signifies hereinafter an at least partially hollow cylindrical body which acts as a shutter for a respective valve.

Advantageously, the main supply spool 10I is coaxial with the longitudinal axis A and is mounted so it can slide axially inside the main supply chamber 9I. The main supply chamber 9I is configured, together with the main supply spool 10I, to define the main brake valve 4I.

The main brake valve 4I is a slide valve. Advantageously, the main brake valve 4I is a three-position four-way valve.

Advantageously, the main supply chamber 9I has a main supply inlet 11I for high-pressure oil, supplied by the main supply PI, and a main supply outlet 12I for sending high-pressure oil, in a known way, to a towed vehicle connected to the agricultural or forestry machine.

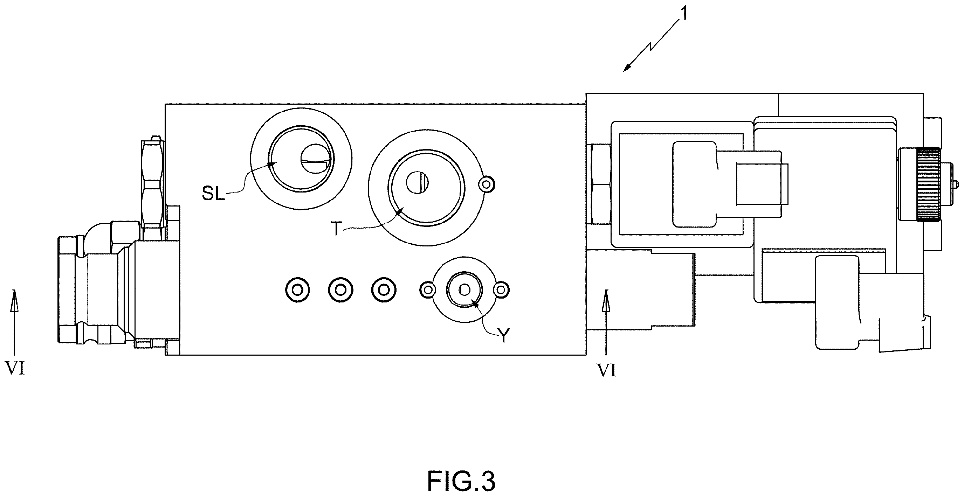

The distributor 1 also has a pilot chamber 13 and comprises a main pilot spool 14, which is configured, together with the pilot chamber 13, to define the pilot valve 7. As shown in figure 3, the pilot chamber 13 is coaxial with the main supply chamber 9I, and the main pilot spool 14 is coaxial with the longitudinal axis A and is mounted so it can slide axially inside the pilot chamber 13. The pilot chamber 13 has a pilot outlet 15 which is connected to a distribution valve 69, as shown in greater detail below (figures 7 to 10).

As shown in figure 4, the pilot valve 7 also comprises calibration means 16 which are configured to act axially on the main supply spool 10I and are configured to hold, in use, the main supply spool 10I in a predetermined working position along the longitudinal axis A, when the resistant pressure of the high-pressure oil, to which the main supply spool 10I is subjected, is above a predetermined value. In particular, the calibration means 16 in turn comprise a support 17 fixed with respect to the body 3 of the distributor and spring-back means 18, in particular a spring. The support 17 is arranged inside the pilot chamber 13, coaxial with the longitudinal axis A and in communication with the main supply chamber 9I via the support 17.

Advantageously, the support 17 is a cylindrical body housed inside the pilot chamber 13 and fixed axially with respect to the longitudinal axis A. The support 17 has a cylindrical internal cavity 19, coaxial to the forward movement axis and suitable to accommodate the main pilot spool 14 which is mounted axially so it can move inside the internal cavity 19.

Advantageously, the support 17 has a calibration conduit 20 which diametrically crosses the support 17 and puts the internal cavity 19 in communication with the sensor valve 5, as illustrated in greater detail below.

The main pilot spool 14 is mounted so it can move inside the internal cavity 19. The main pilot spool 14 in turn has an internal cavity 23 which is in fluid communication with the main supply chamber 9I. The main pilot spool 14 also has two lateral openings 24 diametrically opposite each other and opposed with respect to the internal cavity 23. The lateral openings 24 put the internal cavity 23 of the main pilot spool 14 in communication with the calibration conduit 20.

The pilot valve 7 is a slide valve. Advantageously, the pilot valve 7 is a three-position four-way valve. In particular, the pilot valve has a resting position R, a working position L, and an emergency position S, as illustrated in greater detail below.

Advantageously, when the main pilot spool 14 is in the emergency position S, the lateral openings 24 are aligned with the calibration conduit 20 and the main supply chamber 9I is in communication with the sensor valve 5. As illustrated in greater detail below, when the main pilot spool 14 is in the emergency position S, the main supply chamber 9I is in communication:

- with the exhaust T if the sensor valve 5 detects that the distributor 1 is connected to a towed vehicle which has an auxiliary line;
- with a supply of oil at a predefined pressure, in particular of approximately 10 bar.

As shown in figure 3, the main actuator 6 is a actuator of known type and shown schematically, comprising a main brake piston 21 which is coaxial with the longitudinal axis A and is mounted axially so it can slide along said longitudinal axis A.

Advantageously, the distributor 1 also comprises a braking compensator 22 which is connected, via the sensor valve 5, to an actuating oil supply Y of the braking system of the agricultural or forestry machine. Overall, the actuating oil supply Y is connected to the brake pedal of the agricultural or forestry machine and the oil is sent to the distributor 1 to actuate the braking of the towed vehicle.

The compensator 22 is interchangeable and is constructed as a separate body from the body 3 of the distributor 1. The compensator 22 is mounted in a releasable way on the body 3 of the distributor 1 so that it can be replaced, as required, with a different compensator 22 configured to achieve different braking times for the towed vehicle.

In other words, the compensator 22 can be chosen from a group of different actuators suitable to move the main braking piston 21 axially as a result of an input issued by an operator. As illustrated in greater detail below, Advantageously, the compensator 22 is connected to the sensor valve 5 so as to vary the reaction times of the main pilot spool 14 depending on whether the distributor 1 is connected to a towed vehicle with or without an auxiliary line.

As shown in figure 4, the main pilot spool 14 is axially interposed between the braking piston 21 and the main supply spool 10I. In particular, the main pilot spool 14 is configured to transfer axial movements imparted by the braking piston 21 to the main supply spool 10I, as illustrated in greater detail below.

As shown in figure 4, the distributor 1 has a distribution chamber 25 having a longitudinal axis B. The distributor 1 also comprises a distribution spool 26. The distribution chamber 25 is configured, together with the distribution spool 26, to define the sensor valve 5.

Advantageously, the distributor 1 comprises a coupling 27 which is configured to be coupled, in use, to a corresponding coupling (of known type and not shown) of a towed vehicle constructed according to the new regulation, i.e. having a second hydraulic line.

The coupling 27 has an auxiliary supply chamber 28 and a supply conduit 29 which connects the auxiliary supply chamber 28 with the outside. Preferably, the auxiliary supply chamber 28 and the supply conduit 29 are coaxial with the distribution chamber 25. The auxiliary supply chamber 28 has an auxiliary supply opening 30 configured to be placed in communication with the auxiliary supply PII, as illustrated in greater detail below.

The coupling 27 also comprises a shutter 31 which is mounted so it can slide along the auxiliary supply chamber 28 and the supply conduit 29 from a closed position C (shown in the figure) to an open position O and vice versa.

The shutter 31 is coaxial with the distribution spool 26. The shutter 31 comprises a seal body 32 which has a size and shape complementary to the size and shape of the supply conduit 29, and a plug 33 which protrudes from the seal body 32 and is interposed between the seal body 32 and the distribution spool 26. Advantageously, the plug 33 is configured to be placed in contact with the distribution spool 26 and cause the translation of the distribution spool 26 when the shutter 31 moves from the closed position C to the open position O.

The shutter 31 also comprises a calibration component 34, in particular a spring which acts on the seal body 32 so as to prevent translation of the seal body 32 from the closed position C to the open position O in the absence of a connection of the coupling 27 with a towed vehicle constructed according to the new regulation.

According to the example shown, the calibration component 34 is a helical spring fitted on the plug 33.

Advantageously, the sensor valve 5 is a fourway two-position valve. In particular, the sensor valve 5 can be moved from a position H for distribution of oil for a towed vehicle without the auxiliary line LII to a position G for distribution of oil for a towed vehicle having the auxiliary line LII, i.e. a vehicle constructed according to the new regulation.

In particular, depending on the position of the sensor valve 5, the following change: the connection made between the main brake valve 4I and the auxiliary supply PII, and the connection between the main brake valve 4I and the actuating oil supply Y.

It should be noted that although the new regulation provides for connection to the distributor 1 of towed vehicles constructed in accordance with either the old or the new regulation, this operation is however not immediate, given that the braking rates for towed vehicles according to the two different regulations are not equal. In particular, a towed vehicle constructed in accordance with the old regulation has delayed braking operation according to the new application when, by law, it must be timed in advance (when the agricultural or forestry machine brakes it must pull, not push, the towed vehicle).

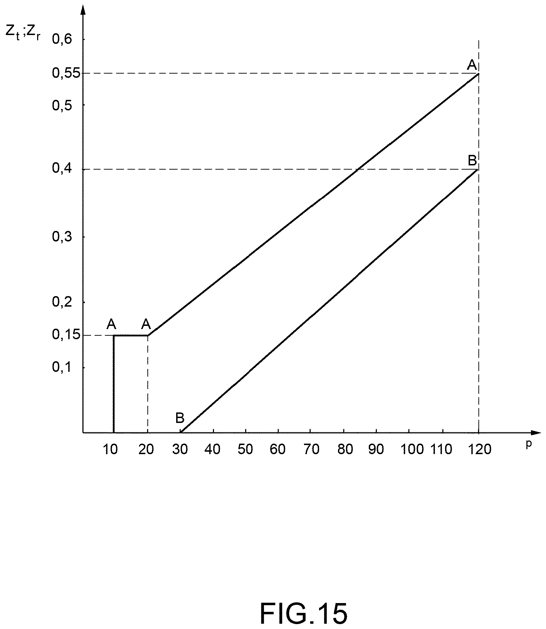

In particular, figure 15 shows a graph relating to the braking characteristics required in accordance with the old pre-2016 regulation, wherein:

- p is the rated pressure of hydraulic fluid at the coupling head calculated in bar;
- $Z_t$ is the rate of braking of the agricultural or forestry machine and is given by the following relationship:

$$Z_t = \frac{F_t}{gM_t}$$

Where

$F_t$ is the sum of the braking forces at the periphery of the wheels of the agricultural or forestry machine calculated in N

g is the acceleration due to gravity calculated in $\frac{m}{s^2}$

$M_t$ is the mass in running order of the tractor calculated in kg;

- $Z_r$ is the rate of braking of the towed vehicle and is given by the following relationship:

$$Z_r = \frac{F_r}{gM_r}$$

Where

$F_t$ is the sum of the braking forces at the periphery of the wheels of the towed vehicle calculated in N

g is the acceleration due to gravity calculated in $\frac{m}{s^2}$

$M_r$ is the mass in running order of the towed vehicle calculated in kg;

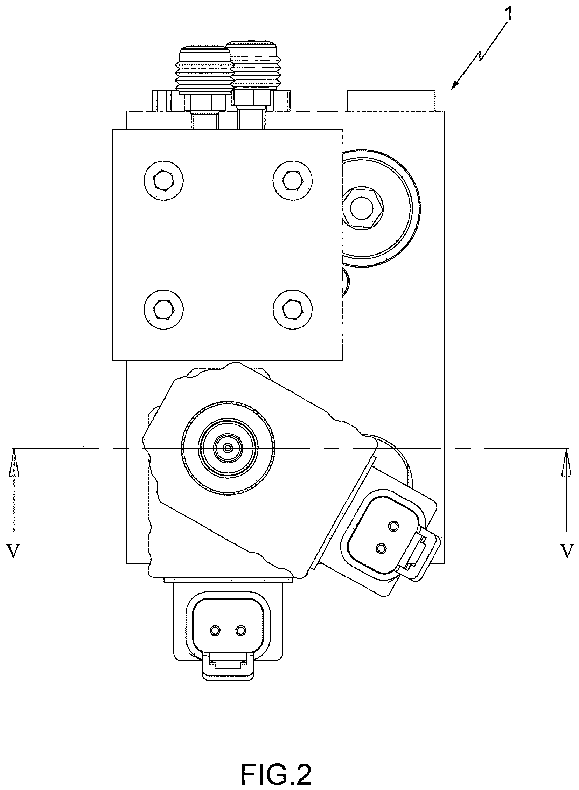

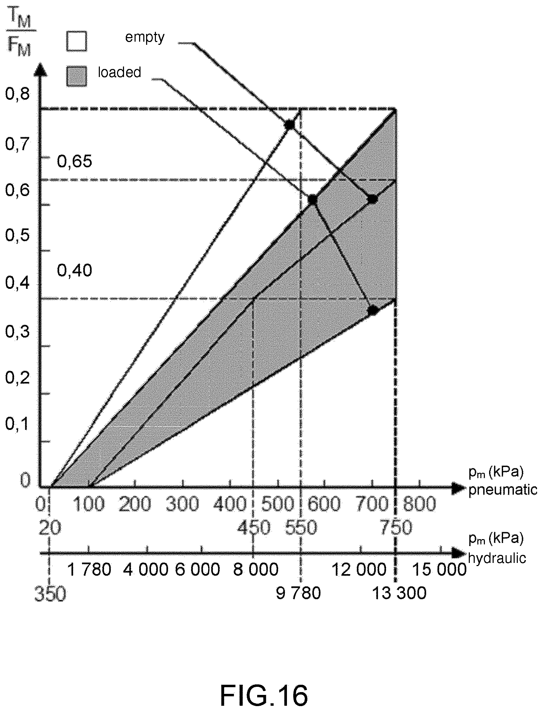

However, figure 16 shows a graph relating to the braking characteristics required in accordance with the old pre-2016 regulation. It should be noted that in the graph shown in figure 2:

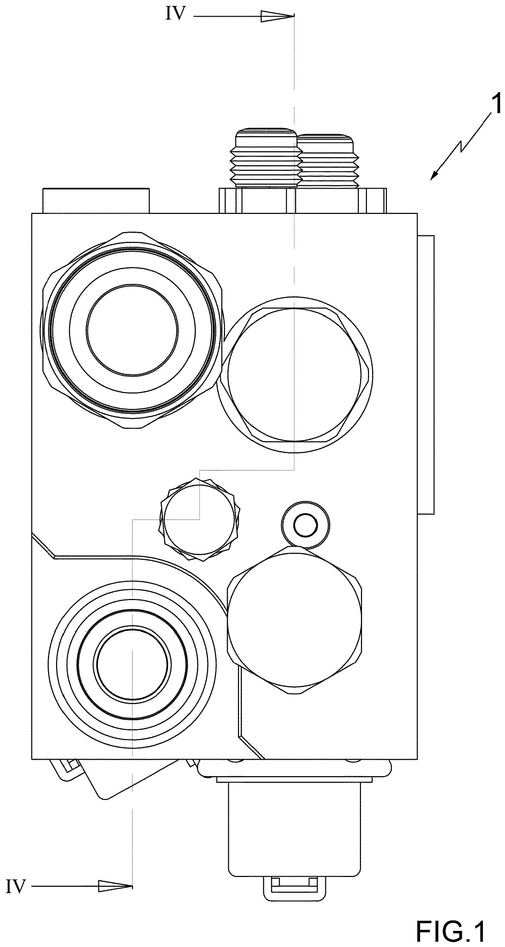

- the rate $T_M$ is the rate $Z_T$ of figure 1, i.e. the braking rate of the agricultural or forestry machine;
- the rate $F_M$ is the rate $Z_R$ of figure 1, i.e. the braking rate of the towed vehicle;

The new regulation, substantially modifying the operating mode of the braking systems and also their construction (two hydraulic lines instead of only one), as a first consequence therefore causes a variation in the behaviour of the braking response of towed vehicles.

To overcome this drawback, Advantageously, the sensor valve 5 comprises a distribution slide 35 to control the connection between the main brake valve 4I and the actuating oil supply Y. The sensor valve 5 also comprises a release slide 36 to control the connection between the main brake valve 4I and the auxiliary supply PII.

As shown in figure 4, the distribution slide 35 is established along a portion of the distribution chamber 25 inside which a spool, in particular a portion of the distribution slide 26, is mounted so that it can slide. The distribution chamber 25 at the portion for the establishment of the distribution slide 35 has: an inlet opening 37 for the actuating oil supply Y, an indirect control outlet opening 38, and a direct control outlet opening 39. The distribution spool 26 is configured in a known way to selectively direct the oil of the actuating oil supply Y from the inlet opening 37 to either the indirect control outlet opening 38 or the direct control outlet opening 39, depending on the position of the distribution spool 26. In particular, when the distribution spool 26 is in the distribution position G, i.e. in the presence of a towed vehicle constructed according to the new regulation, the oil of the actuating oil supply Y is directed through the direct control outlet opening 39. On the contrary, when the distribution spool 26 is in the distribution position H, i.e. in the presence of a towed vehicle constructed according to the old regulation, the oil of the actuating oil supply Y is directed through the indirect control outlet opening 38.

Advantageously, the compensator 22 is interposed between the distribution slide 35 and the main brake valve 4I. The cooperation of the distribution slide 35 and the compensator 22 allows the braking action of the distributor 1 to be controlled depending on whether it is connected to a towed vehicle according to the old or the new regulation. In particular, the cooperation of the distribution slide 35 and the compensator 22 helps to ensure braking compliance of the distributor 1 with both the old and the new regulation.

In particular, the compensator 22 is configured to act on the pilot piston 21 of the main pilot valve 7 so as to move it, in use, from the resting position R to the working position L.

As shown in figure 4, the compensator 22 has a compensation chamber 41 and a direct control chamber 42. Advantageously, the flow area of the compensation chamber 41 is different from the flow area of the direct control chamber 42. In the example shown in figure 4, the flow area of the compensation chamber 41 is greater than the flow area of the direct control chamber 42.

The compensator 22 also comprises a compensation spool 43 comprising, in turn, a head 44 and a stem 45. The head 44 is mounted so it can slide inside the compensation chamber 41 and the stem 45 is mounted so it can slide inside the direct control chamber 42.

As shown in the figure, the compensation chamber 41 and the direct control chamber 42 are coaxial with the longitudinal axis A of the main supply chamber 91.

Similarly, the head 44 and the stem 45 of the compensator 22 are coaxial with the longitudinal axis A, i.e. with the main supply spool 10I. The stem 45 is interposed between the head 44 and the main supply spool 10I. Advantageously, the stem 45 is configured to axially push, in use, the brake piston 21 from the resting position R to the working position L.

As shown in figure 4, the distributor 1 has an indirect control conduit 46 which connects the indirect control outlet opening 38 with the compensation chamber 41. The distributor 1 also has a direct control conduit 47 which connects the direct control outlet opening 39 with the compensation chamber 42.

Advantageously, the flow area of the compensation chamber 41, i.e. the area pushed by the head 44 of the compensation spool 43, and the extension along the longitudinal axis A of the compensation chamber 41 are determined as a function of the type of vehicle being towed. Advantageously, the compensator 22 can be mounted in a releasable way to the body 3 of the distributor. The compensator 22 can therefore be replaced depending on the type of vehicle being towed. In other words, the compensator 22 is chosen from a group of different compensators (not shown) which differ from each other, for example, by the size of the flow area of the compensation chamber 41 (i.e. by the area pushed by the head 44 of the compensation spool 43) and/or the extension along the longitudinal axis A of the compensation chamber 41. In other words, the compensator 22 is chosen from a group of different compensators, each of which provides a different time for moving the braking piston 21 from the resting position R to the working position L under the control of the actuating oil supply Y.

In particular, the compensator 22 shown in figure 4 is configured to anticipate braking of the towed vehicle. In other words, the compensator 22 is configured to establish the correct braking rate.

It should be noted that for towed vehicles constructed in accordance with the old regulation, it is mandatory to provide a release pressure of approximately 10 bar for the automatic braking system.

In order to fulfil this requirement, the distributor 1 comprises a calibration valve 48 configured to cooperate with the release slide 36 and the main brake valve 41.

In this respect, it should be noted that the pilot chamber 13 has a signal opening 50 (shown schematically in figures 7 to 10). Similarly, the main supply chamber 9I has a pilot opening 51.

The release slide 36 has a spool which, according to the example shown in figure 4, is established by a portion of the distribution spool 26, an exhaust opening 52, a flow opening 53, and a calibration opening 54.

The distributor 1 also has:

- a signal conduit 55 which connects the signal opening 50 with the flow opening 53;
- an exhaust conduit 56 which connects the pilot opening 51 with the exhaust opening 52; and
- a calibration conduit 57 which connects the pilot opening with the exhaust opening.

Advantageously, the distributor 1 comprises a calibration valve 48 arranged in the calibration conduit 57 and configured to set a predetermined pressure value in the calibration conduit 57. In particular, the calibration valve 48 is configured to divert the oil to the exhaust T if the pressure in the calibration conduit 57 exceeds a predetermined value. According to the example shown, the calibration valve 57 is a non-return valve comprising a spring 59 and a screw 60 configured in a known way to preload the spring 59 to a predefined value.

Advantageously, the spring 59 is pre-loaded to ensure closing of the calibration valve 57 at 10 bar.

As shown in figures 7 to 10, the exhaust conduit 56 is connected to the pilot opening 51 via the calibration conduit 57. In particular, the exhaust conduit 56 is connected to the calibration conduit 57 between the calibration valve 48 and the pilot opening 51.

When the distribution spool 26 is in the distribution position G, i.e. in the presence of a towed vehicle according to the new regulation, the signal conduit 55 is connected to the exhaust conduit 56. In other words, the pilot chamber 13 is directly connected to the exhaust T.

However, when the distribution spool 26 is in the distribution position H, i.e. in the presence of a towed vehicle according to the old regulation, the signal conduit 55 is connected to the calibration conduit 57 wherein the oil coming from the pilot chamber 13 is maintained at a predetermined pressure.

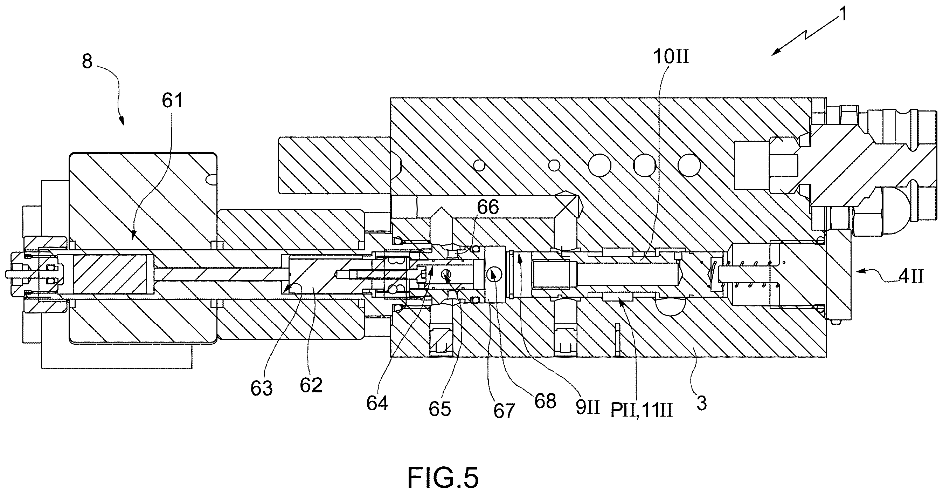

As shown in figure 5, the auxiliary brake valve 411 has an auxiliary supply chamber 9II, an auxiliary supply spool 10II and an auxiliary supply inlet 11II connected to an auxiliary supply PII.

As shown in figure 5, the auxiliary actuator 8 comprises, in turn, an auxiliary actuator 61 (in the example shown, a solenoid valve) operable, in known manner, directly by an operator.

The auxiliary actuator 8 also comprises an auxiliary pilot spool 62 mounted so it can slide axially inside an auxiliary pilot chamber 63.

Advantageously, the auxiliary actuator 8 can engage in a releasable way with the body 3 of the distributor in order that it may be replaced either with a spare auxiliary actuator 8 or with an auxiliary actuator 8 of a different and interchangeable type, for example with an auxiliary actuator comprising a different auxiliary actuator. Advantageously, the auxiliary actuator 8 can be chosen from a group of alternative auxiliary actuators, for example a mechanical valve or a proportional solenoid valve or a proportional mechanical valve. Advantageously, when the auxiliary actuator is a proportional solenoid valve, modulation of emergency braking for a speed of the towed vehicle of more than 40 km/h is achieved. Advantageously, when the auxiliary actuator is a proportional mechanical valve, modulation of emergency braking for a speed of the towed vehicle of more than 40 km/h is achieved.

The auxiliary pilot spool 62 is configured to connect the auxiliary supply chamber 10II to the exhaust T when it is in an emergency braking situation. As shown in figure 5, the auxiliary pilot spool 62 has an internal cavity 64 and a lateral opening 65 which puts the internal cavity 64 in communication with the outside. When the auxiliary pilot spool 62 is in the emergency braking position, the lateral opening 65 is aligned with an exhaust opening 66 of the auxiliary pilot chamber 63 connected to the exhaust T.

Advantageously, the auxiliary brake valve 411 has a signal chamber 67 which has a lateral opening 68. The signal chamber 67 is interposed between the auxiliary supply spool 10II and the auxiliary pilot spool 62.

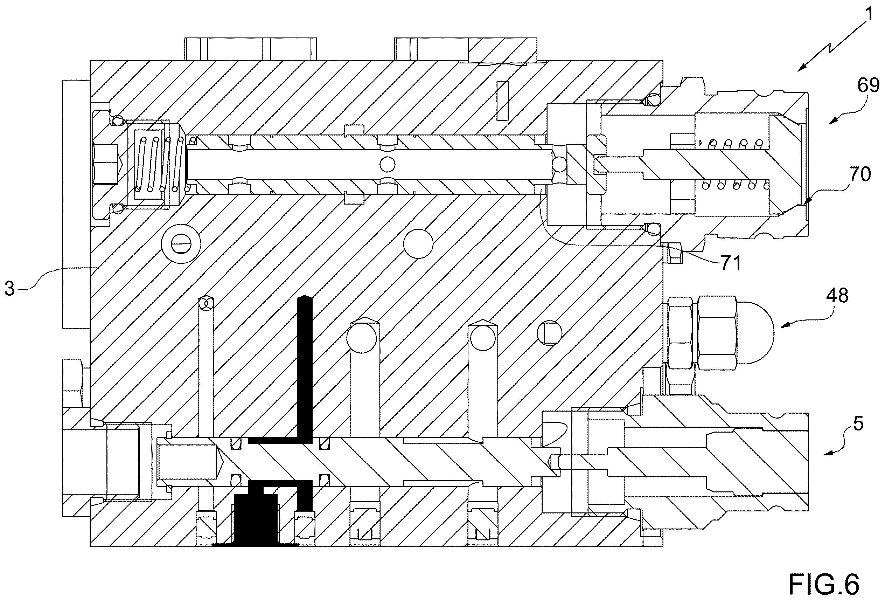

As shown in figures 6 to 10, the distributor 1 may also comprise a distribution valve 69 of known type and shown schematically. Advantageously, the distribution valve 69 is of the quick connection type and can be connected in a releasable manner with a towed vehicle. According to the example shown, the distribution valve 69 is a four-way two-position valve, i.e. a position of high-pressure oil supply E to the towed vehicle and a position of failure of high-pressure oil supply D to the towed vehicle.

The distribution valve 69 has a main outlet 70 configured to send high-pressure oil from the main line LI to the towed vehicle.

The distribution valve 69 has a supply chamber 71 connected to the main high-pressure oil supply PI via a supply conduit 72 (shown schematically in figures 7 to 10), which is in turn in communication with the main supply chamber 91.

The distribution valve 69 also comprises a supply spool 73 which has an internal cavity 74.

The supply chamber 71 also has:

- an emergency exhaust opening 75 connected to the exhaust T; and
- an emergency signal opening 76 connected, via an emergency signal conduit 77, to the signal chamber 67 of the auxiliary brake valve 4II.

The supply spool 73 also has an opening 78 which is configured to put the internal cavity 74 in communication with the emergency exhaust opening 75 when the supply spool 73 is in the failure position D.

The distribution valve 69 can be established inside the body 3 of the distributor 1. Alternatively, the distribution valve 69 is a separate body fluidly connected, in known manner not shown, with the distributor 1.

A diagram is shown in figure 11 of a hydraulic system 2 for an agricultural or forestry machine comprising a distributor 1 as shown in any of the figures 1 to 10. In particular, figure 11 shows a system 2 for a towed vehicle constructed according to the old Italian regulation suitable to travel at a speed of less than 40 km/h, i.e. without an auxiliary line LII and with a minimum release pressure of 10 bar.

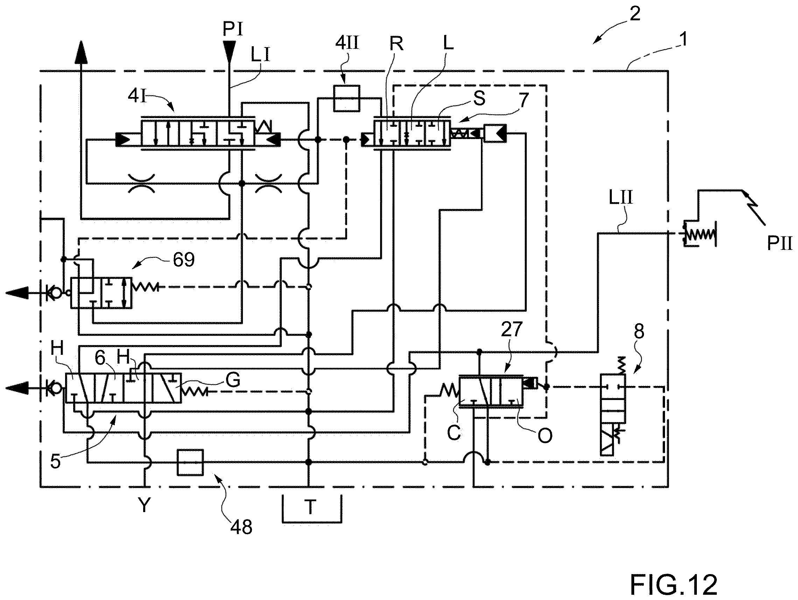

A diagram is shown in figure 12 of a hydraulic system 2 for an agricultural or forestry machine comprising a distributor 1 as shown in any of the figures 1 to 10. In particular, figure 12 shows a system 2 for a towed vehicle constructed according to the new Italian regulation, i.e. having an auxiliary line LII, and suitable to travel at a speed of less than 40 km/h.

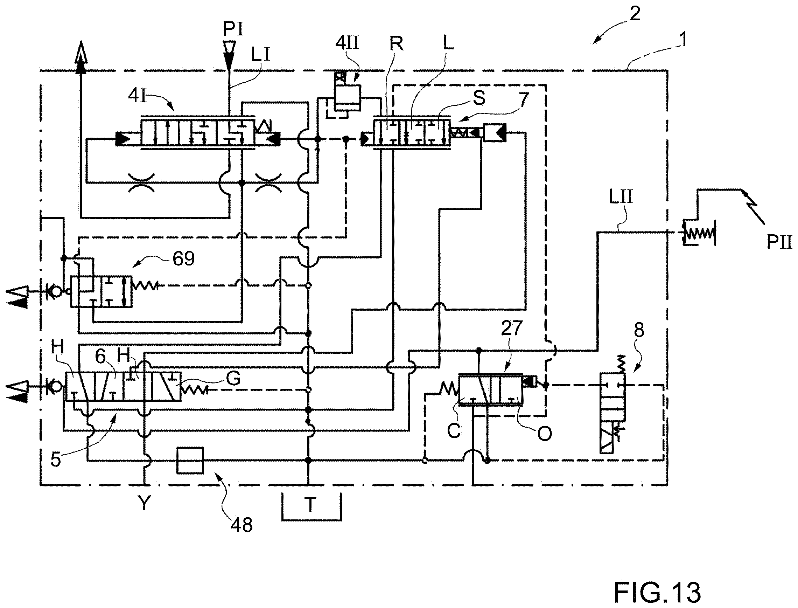

A diagram is shown in figure 13 of a hydraulic system 2 for an agricultural or forestry machine comprising a distributor 1 for a towed vehicle constructed according to the old Italian regulation suitable to travel at a speed of more than 40 km/h, i.e. without an auxiliary line LII and with a minimum release pressure of 10 bar.

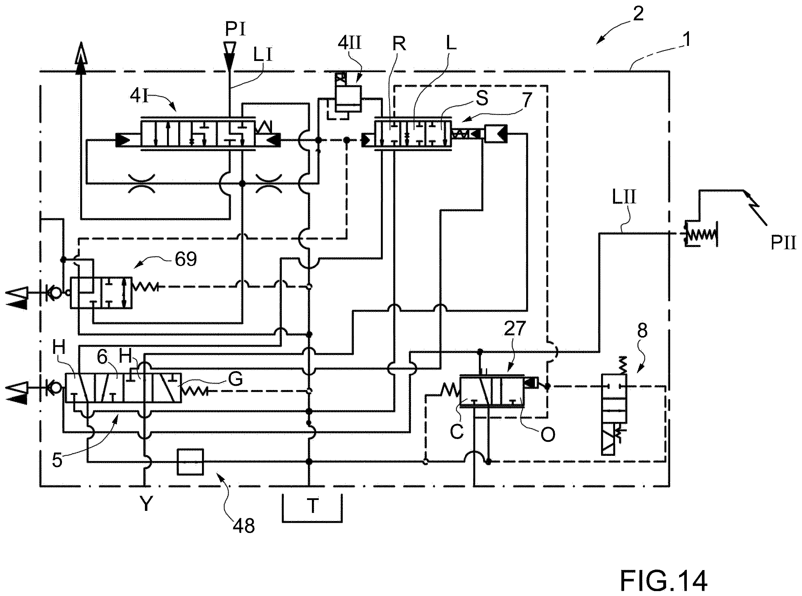

A diagram is shown in figure 14 of a hydraulic system 2 for an agricultural or forestry machine comprising a distributor 1 for a towed vehicle constructed according to the new Italian regulation, i.e. having an auxiliary line LII, and suitable to travel at a speed of more than 40 km/h.

In use, the distributor 1 is connected to a towed vehicle which can be constructed according to the old or the new regulation. The operation of the distributor 1 depending on the type of vehicle being towed is described below.

USE OF THE DISTRIBUTOR 1 ON BOARD A TOWED VEHICLE CONSTRUCTED ACCORDING TO THE NEW LEGISLATION, I.E. COMPRISING AN AUXILIARY LOW-PRESSURE OIL LINE LII

The distribution valve 69 and the coupling 27 of the distributor 1 are coupled in a known way to a towed vehicle constructed according to the new regulation in order to be able to send high-pressure oil coming from the main line LI and, respectively, low-pressure oil coming from the auxiliary line LII to the towed vehicle.

By connecting the coupling 27 to the towed vehicle, the shutter 31 of the sensor valve 5 is moved along the longitudinal axis B from the closed position C to the open position O. As a result, the distribution spool 26 is thus pushed into the distribution position G, of presence of a towed vehicle according to the new regulation.

Thanks to the arrangement of the shutter 31 in the open position O, the distribution spool 35 is positioned in such a way that the inlet opening 37 for the actuating oil supply Y is connected to the direct control outlet opening 39. The oil from the actuating oil supply Y is thus directed through the sensor valve 5 and to the direct control conduit 46, in the direct control chamber 42.

In addition, thanks to the arrangement of the shutter 31 in the open position O, the release slide 36 of the sensor valve 5 is arranged so that the signal conduit 55 is connected to the exhaust conduit 56. The pilot chamber 13 of the pilot valve 7 is thus put into communication with the exhaust T, i.e. a minimum value is not set for the pressure of the oil sent to the towed vehicle.

During braking, an operator acting on the brake pedal or on the actuating oil supply Y of the agricultural or forestry machine operates the brake piston 21 by sliding it from the resting position R to the braking position F, sending hydraulic fluid coming from the actuating oil supply Y into the direct control chamber 42.

As a result, the brake piston 21 causes the main pilot spool 14 to slide into the working position L so as to close the signal opening 50 and thus the connection with the exhaust T. The pressure of the oil inside the main brake valve 4I in the main line therefore increases because of the high-pressure oil supplied from the main supply PI through the main supply inlet 11I.

As a result, the main brake valve 4I moves into the supply position, wherein high-pressure oil is sent to the towed vehicle via the distribution valve 69.

At the same time, in the auxiliary line LII, low-pressure oil is supplied from the auxiliary supply PII to the auxiliary supply chamber 28 via the auxiliary brake valve 4II. Since the shutter 31 is in the open position O, the low-pressure oil is directed through the coupling 27 from the auxiliary supply chamber 28 to the towed vehicle.

It should be noted that a towed vehicle according to the new regulation comprises a parking braking system (of known type and not shown) which is configured to lock the wheels of the towed vehicle when it is not connected to an agricultural or forestry machine. In other words, the parking braking system is configured to lock the wheels of the towed vehicle when it is not supplied with hydraulic fluid.

Generally, when a towed vehicle is connected to a system 2, in particular to the distributor 1 of an agricultural or forestry machine, the low-pressure oil coming from the auxiliary line LII acts on the parking braking system, so as to unlock the wheels of the towed vehicle. If the supply of oil from the auxiliary line LII to the towed vehicle is interrupted, the parking braking system is activated in a known way to brake the wheels of the towed vehicle.

If a failure, for example an oil leak in the main line LI, occurs at the time of braking (when the oil is sent from the actuating oil supply Y to the direct control chamber 42) the brake piston 21 causes the main pilot spool 14 to slide. However, the pressure inside the main supply chamber 9I does not increase, because of the failure in the main line LI, and the main pilot spool 14, not being subjected to the action of the difference in the pressure of the oil in the main supply chamber 91, continues to slide, ending up by moving into the emergency position S.

In the emergency position S, the main supply chamber 9I is connected to the exhaust T via the main pilot spool 14 and the signal conduit 55. In addition, in the emergency position S, the main pilot spool 14 also causes the connection of the auxiliary line LII to the exhaust T. Closure of the shutter 31 is thus caused and, consequently, interruption of low-pressure oil to the towed vehicle. The parking braking system of the towed vehicle is thus automatically activated.

If there is a failure of the braking system, for example a failure of the brake pumps which supply high-pressure oil to the main line LI, the operator must operate the auxiliary actuator 8 (for example a handbrake) . Operating the auxiliary actuator 8 puts the auxiliary supply chamber 9II in communication with the exhaust T via the auxiliary pilot spool 62. This thus causes the sliding of the auxiliary supply spool 10II and the closing of the auxiliary supply inlet 11II. The supply of low-pressure oil to the towed vehicle in the auxiliary line LII is therefore stopped. The emergency brakes are thus automatically operated, in known manner and not shown, to brake the towed vehicle.

USE OF THE DISTRIBUTOR 1 ON BOARD A TOWED VEHICLE CONSTRUCTED ACCORDING TO THE OLD LEGISLATION, I.E. A TOWED VEHICLE LACKING AN AUXILIARY LOW-PRESSURE OIL LINE LII

It should be noted that towed vehicles according to the old legislation, as well as not being provided with an auxiliary low-pressure oil line LII, require a minimum value of the oil pressure to release the parking braking system. For example, under the old Italian regulation it is necessary to supply oil at a minimum pressure of 10 bar in order to cause the brakes to be released, and a pressure of 140 bar is required to obtaining the maximum braking.

In use, the distribution valve 69 is connected in a known way to the towed vehicle constructed according to the old regulation (i.e. lacking the auxiliary low-pressure line LII) .

The coupling 27 is not connected and the shutter 31 remains in the closed position C.

As a result, the distribution spool 26 remains in the distribution position H, of presence of a towed vehicle according to the old regulation.

The distribution spool 35 is positioned in such a way that the inlet opening 37 for the actuating oil supply Y is connected to the indirect control outlet opening 38. The oil from the actuating oil supply Y is thus directed through the sensor valve 5 and to the indirect control conduit 46, in the compensation chamber.

In addition, thanks to the arrangement of the shutter 31 in the closed position C, the release slide 36 of the sensor valve 5 is arranged so that the signal conduit 55 is connected to the calibration conduit 57. The pilot chamber 13 of the pilot valve 7 is thus put into communication with the calibration conduit 57 wherein, by means of the calibration valve 48 (a non-return valve), a minimum value is set in the pilot chamber 13 for the pressure of the oil sent to the towed vehicle.

During braking, an operator acting on the brake pedal, i.e. on the actuating oil supply Y of the agricultural or forestry machine, operates the brake piston 21 by sliding it from the resting position R to the braking position F, sending hydraulic fluid coming from the actuating oil supply Y into the compensation chamber 41. It should be noted that by means of the compensation spool, a delay in operation is achieved between the braking of the agricultural or forestry machine and that of the towed vehicle. This thus ensures that the towed vehicle is braked later than the agricultural or forestry machine. The nature of the delay applicable is a function of the type of compensation spool 43 installed on the distributor 1. Advantageously, the compensation spool 43 can be replaced with another of a different size so as to obtain the desired delay for the specific towed vehicle.

As a result, with the delay imparted by the compensation spool 43, the brake piston 21 cause the main pilot spool 14 to slide into the working position L so as to close the signal opening 50 and thus the connection with the calibration conduit. This ensures that the high-pressure oil in the main line LI is sent to the towed vehicle once it has reached the minimum pressure required by the regulation for the release of the braking system. For example, for Italy this ensures the release of the braking system once the pressure has reached 10 bar.

Closing the connection with the signal opening 50 inside the main line LI increases the pressure of the oil inside the main brake valve 4I because of the high-pressure oil supplied internally from the main supply PI via the main supply inlet 11I. It should be noted that the connection with the calibration conduit 57, via the signal opening 50, allows the maximum pressure of the oil in the main line LI to be increased from the pre-loaded pressure provided. Therefore, in the case of the Italian regulation the maximum braking pressure in the main line LI is increased by 10 bar (precisely 10 bar more than the maximum pressure of the main supply PI).

As a result, the main brake valve 4I moves into the supply position, wherein high-pressure oil is sent to the towed vehicle via the distribution valve 69.

At the same time, in the auxiliary line LII, low-pressure oil is supplied from the auxiliary supply PII to the auxiliary supply chamber 28 via the auxiliary brake valve 41I. Since the shutter 31 remains in the closed position C, the low-pressure oil fills the auxiliary supply chamber 28 and the emergency signal conduit 77 of the distribution valve 69.

It follows from the foregoing that the distributor 1 of the type described above has the advantage of being able to be installed interchangeably on board towed vehicles according to either the old or the new regulation ensuring compliance with both regulations during braking of the towed vehicle.

The distributor 1 in particular has the benefit of ensuring, in the case of application to a vehicle built according to the old regulation, a minimum predetermined pressure for the release of the braking system. In addition, the distributor 1 makes it possible to delay the braking action of the towed vehicles according to the old regulation at will, depending on the type of compensation spool 43 installed.

The distributor 1 also has the advantage of ensuring operation of towed vehicles according to the new regulation and providing automatic braking if there is a failure in the main line LI.

From the above it follows that the distributor and the system of the type described above are particularly effective and versatile. In addition, an economic benefit is ensured for the user, who can install a distributor 1 on a towed vehicle, irrespective of whether the vehicle was constructed according to the new or old legislation.

**Claims**

1. A hydraulic distributor for braking an agricultural or forestry machine comprising:

   a first slide valve (7) having a first chamber (13) with a signal opening (50) and comprising a first spool (14), which can axially slide in said first chamber (13);
   a first actuator (6), which is configured to axially vary the position of the first spool (14) of the first slide valve (7) and can be operated by an operator during the braking;
   a second slide valve (41), which has a first inlet (11I) for a first supply (PI) of high-pressure oil and a first supplying outlet (12) for sending, in use, high-pressure oil to a towed vehicle connected to said agricultural or forestry machine, the second slide valve (41) comprising a second, axially sliding spool (10I), which can be operated by means of the first spool (14) of the first slide valve (7);
   a third slide valve (41I) comprising a third, axially sliding spool (10II) and having a second inlet (11II) for a second supply (PII) of low-pressure oil;
   a fifth slide valve (5) comprising a fifth, axially sliding spool (26), a shutter (31) and a coupling (27) configured to be connected, in use, to an auxiliary line (LII) of a vehicle towed;
   wherein said shutter (31) is configured to move said fifth spool (26) from a first position to a second position (H, G) when said coupling (27) is connected, in use, to a towed vehicle;
   the fifth slide valve having a second supply outlet (29) for sending, in use, low-pressure oil coming from said third slide valve (41I) to the towed vehicle; said shutter (31) being configured so as to be arranged in an open position (O) when the third slide valve (41I) is connected to the towed vehicle.

2. A distributor according to claim 1 and comprising a compensator (22), which is interposed between the first actuator (6) and the first spool (14) of the first slide valve (7).

3. A distributor according to any of the preceding claims and comprising a pre-loading unit (48) configured to set a minimum pressure inside said first chamber (13).

4. A distributor according to claim 2, wherein said compensator (22) comprises a compensation spool (43), which is interposed between an actuating oil supply (Y) and the first spool (14); wherein said compensation unit (22) is arranged downstream, relative to the direction of supply of the actuating oil supply (Y), of a distribution slide (35) established along said fourth spool (26).

5. A distributor according to any of the preceding claims and comprising a calibration valve (48), in particular a non-return valve, which is arranged along a conduit (57) between the fifth and the first spool (26, 14).

6. A distributor according to any of the preceding claims, wherein the first slide valve (7) comprises a working position (L), in which the first spool (14) positions the second spool (10I) in a position which allows the first inlet (11I) for the first supply (PI) for high-pressure oil to be connected to a first control outlet (15); wherein the distributor (1) comprises means of spring-back resistance, in particular a spring, which act axially on the first spool (14) and are configured to hold, in use, the first spool (14) in the working position (L), when the resistant pressure of the oil flowing out of the first control outlet (15) exceeds a predetermined value.

7. A distributor according to claims 5 and 6, wherein the minimum value of the operating pressure of the oil flowing out of the first control outlet (15) is determined by said calibration valve (48).

8. A hydraulic system for braking an agricultural or forestry machine comprising a hydraulic distributor (1) according to any of the preceding claims.

**Patentansprüche**

1. Hydraulikverteiler zum Bremsen einer landwirtschaftlichen oder fortwirtschaftlichen Maschine, der aufweist:

ein erstes Schieberventil (7), das eine erste Kammer (13) mit einer Signalöffnung (50) aufweist und einen ersten Schieber (14) aufweist, der in der ersten Kammer (13) axial schiebbar ist;
einen ersten Aktuator (6), der derart ausgeführt ist, dass er die Position des ersten Schiebers (14) des ersten Schieberventils (7) axial verändert und von einem Bediener während des Bremsvorgangs betätigt werden kann;
ein zweites Schieberventil (4I), das einen ersten Einlass (11I) für ein erstes Zuführen (PI) von Hochdrucköl und einen ersten Zuführauslass (12) zum Leiten von Hochdrucköl bei Verwendung zu einem Anhängefahrzeug, das mit der landwirtschaftlichen oder forstwirtschaftlichen Maschine verbunden ist, aufweist, wobei das zweite Schieberventil (4I) einen zweiten axial schiebbaren Schieber (10I) aufweist, der mittels des ersten Schiebers (14) des ersten Schieberventils (7) betätigt werden kann;
ein drittes Schieberventil (4II), das einen dritten axial schiebbaren Schieber (10II) aufweist und einen zweiten Einlass (11II) für ein zweites Zuführen (PII) von Niederdrucköl aufweist;
ein fünftes Schieberventil (5), das einen fünften axial schiebbaren Schieber (26), einen Verschluss (31) und eine Kopplung (27) aufweist, die derart ausgeführt ist, dass sie bei Verwendung mit einer Hilfsleitung (LII) eines angehängten Fahrzeugs verbunden wird;
wobei der Verschluss (31) derart ausgeführt ist, dass er den fünften Schieber (26) von einer ersten Position zu einer zweiten Position (H, G) bewegt, wenn die Kopplung (27) bei Verwendung mit einem Anhängefahrzeug verbunden ist;
wobei das fünfte Schieberventil einen zweiten Zuführauslass (29) zum Leiten von Niederdrucköl, das aus dem dritten Schieberventil (4II) kommt, bei Verwendung zu dem Anhängefahrzeug; wobei der Verschluss (31) derart ausgeführt ist, dass er in einer offenen Position (O) angeordnet ist, wenn das dritte Schieberventil (4II) mit dem Anhängefahrzeug verbunden ist.

2. Verteiler nach Anspruch 1, der einen Kompensator (22) aufweist, der zwischen dem ersten Aktuator (6) und dem ersten Schieber (14) des ersten Schieberventils (7) liegt.

3. Verteiler nach einem der vorstehenden Ansprüche, der eine Vorspanneinheit (48) aufweist, die derart ausgeführt ist, dass sie einen Mindestdruck innerhalb der ersten Kammer (13) festlegt.

4. Verteiler nach Anspruch 2, wobei der Kompensator (22) einen Kompensationsschieber (43) aufweist, die sich zwischen einer aktuierenden Ölzufuhr (Y) und dem ersten Schieber (14) befindet; wobei die Kompensationseinheit (22) stromabwärts relativ zu der Richtung der Zufuhr der aktuierenden Ölzufuhr (Y) eines entlang des fünften Schiebers (26) ausgebildeten Verteilungsschiebers (35) angeordnet ist.

5. Verteiler nach einem der vorstehenden Ansprüche, der ein Kalibrierungsventil (48) aufweist, insbesondere ein Rückschlagventil, das entlang einer Leitung (57) zwischen dem fünften und dem ersten Schieber (26, 14) angeordnet ist.

6. Verteiler nach einem der vorstehenden Ansprüche, wobei das erste Schieberventil (7) eine Arbeitsposition (L) aufweist, in welcher der erste Schieber (14) den zweiten Schieber (10I) in einer Position positioniert, die ermöglicht, dass der erste Einlass (11I) für das erste Zuführen (PI) von Hochdrucköl mit einem ersten Steuerauslass (15) verbunden wird; wobei der Verteiler (1) Einrichtungen mit Rückfederungswiderstand aufweist, insbesondere eine Feder, die axial auf den ersten Schieber (14) wirken und derart ausgeführt sind, dass sie bei Verwendung den ersten Schieber (14) in der Arbeitsposition (L) halten, wenn der Widerstandsdruck des Öls, das aus dem ersten Steuerauslass (15) strömt, einen vorbestimmten Wert übersteigt.

7. Verteiler nach Anspruch 5 und 6, wobei der Mindestwert des Betriebsdrucks des Öls, das aus dem ersten Steuerauslass (15) strömt, von dem Kalibrierungsventil (48) bestimmt wird.

8. Hydrauliksystem zum Bremsen einer landwirtschaftlichen oder fortwirtschaftlichen Maschine, die einen Hydraulikverteiler (1) nach einem der vorstehenden Ansprüche aufweist.

## Revendications

1. Distributeur hydraulique de freinage d'un engin agricole ou forestier comprenant :

   une première vanne à tiroir (7) ayant une première chambre (13) avec une ouverture à signal (50) et comprenant une première bobine (14), qui peut coulisser axialement dans ladite première chambre (13) ;
   un premier actionneur (6), qui est configuré pour faire varier axialement la position de la première bobine (14) de la première vanne à tiroir (7) et peut être actionné par un opérateur pendant le freinage ;
   une deuxième vanne à tiroir (4I), qui a une première entrée (11I) pour une première alimentation (PI) d'huile haute pression et une première sortie d'alimentation (12) pour envoyer, en cours d'utilisation, de l'huile haute pression à un véhicule tracté relié à ladite machine agricole ou forestière, la deuxième vanne à tiroir (4I) comprenant une deuxième bobine coulissant axialement (10I), qui peut être actionnée au moyen de la première bobine (14) de la première vanne à tiroir (7) ;
   une troisième vanne à tiroir (4II) comprenant une troisième bobine coulissant axialement (10II) et ayant une seconde entrée (11II) pour une seconde alimentation (PII) d'huile basse pression ;
   une cinquième vanne à tiroir (5) comprenant une cinquième bobine coulissant axialement (26), un obturateur (31) et un couplage (27) configuré pour être connecté, en service, à une conduite auxiliaire (LII) d'un véhicule tracté ;
   dans lequel ledit volet (31) est configuré pour déplacer ladite cinquième bobine (26) d'une première position à une seconde position (H, G) lorsque ledit couplage (27) est connecté, en utilisation, à un véhicule tracté ;
   la cinquième valve à tiroir ayant une deuxième sortie d'alimentation (29) pour envoyer, en service, de l'huile basse pression provenant de ladite troisième vanne à tiroir (4II) vers le véhicule tracté ; ledit volet (31) étant configuré pour être disposé dans une position ouverte (O) lorsque la troisième vanne à tiroir (4II) est reliée au véhicule tracté.

2. Distributeur selon la revendication 1 et comprenant une unité de compensation (22), qui est interposée entre le premier actionneur (6) et la première bobine (14) de la première vanne à tiroir (7).

3. Distributeur selon l'une quelconque des revendications précédentes et comprenant une unité de préchargement (48) configurée pour établir une pression minimale à l'intérieur de ladite première chambre (13).

4. Distributeur selon la revendication 2, dans lequel ladite unité de compensation (22) comprend une bobine de compensation (43), qui est interposée entre une alimentation en huile d'actionnement (Y) et la première bobine (14) ; dans lequel ladite unité de compensation (22) est disposée en aval, par rapport au sens d'alimentation de l'alimentation en huile d'actionnement (Y), d'un tiroir de distribution (35) établi le long de ladite cinquième bobine (26).

5. Distributeur selon l'une quelconque des revendications précédentes et comprenant un clapet de calibration (48), notamment un clapet anti-retour, qui est disposé le long d'un conduit (57) entre la cinquième et la première bobine (26, 14).

6. Distributeur selon l'une quelconque des revendications précédentes, dans lequel la première vanne à tiroir (7) comprend une position de travail (L), dans laquelle la première bobine (14) positionne la deuxième bobine (10I) dans une position qui permet la connexion de la première entrée (11I) de la première alimentation (PI) en huile haute pression à une première sortie de contrôle (15) ; dans lequel le distributeur (1) comprend des moyens de rappel élastique, notamment un ressort, qui agissent axialement sur la première bobine (14) et sont configurés pour maintenir, en service, la première bobine (14) en position de travail (L), lorsque la pression résistante de l'huile s'écoulant de la première sortie de contrôle (15) dépasse une valeur prédéterminée.

7. Distributeur selon les revendications 5 et 6, dans lequel la valeur minimale de la pression de fonctionnement de l'huile sortant de la première sortie de contrôle (15) est déterminée par ladite vanne de calibration (48).

8. Système hydraulique de freinage d'un engin agricole ou forestier comprenant un distributeur hydraulique (1) selon l'une quelconque des revendications précédentes.

IV ⟶ ▷

1

IV ⟶ ▷

FIG.1

1

FIG.2

FIG.3

EP 3 243 715 B1

FIG.4

FIG.5

EP 3 243 715 B1

FIG.6

EP 3 243 715 B1

FIG.7

FIG.8

FIG.9

FIG.10

FIG.11

FIG.12

EP 3 243 715 B1

24

FIG.13

EP 3 243 715 B1

EP 3 243 715 B1

FIG.14

FIG.15

FIG.16

**EP 3 243 715 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0400432 A
- WO 2014096159 A1